# EUROPÄISCHE PATENTSCHRIFT

(11) **EP 1 758 737 B1**
(45) Veröffentlichungstag und Bekanntmachung des Hinweises auf die Patenterteilung: **29.04.2009**
(21) Anmeldenummer: 05747937.0
(22) Anmeldetag: 09.06.2005
(51) Int. Cl.: B32B 17/10, B32B 37/10, B30B 5/02

(54) **LAMINATOR**
LAMINATOR
DISPOSITIF DE LAMINATION

(30) Priorität: 24.06.2004 DE 102004030658
(43) Veröffentlichungstag der Anmeldung: 07.03.2007
(73) Patentinhaber: Meier Vakuumtechnik GmbH, 46395 Bocholt (DE)
(72) Erfinder: STEVENS, Hans-Gerd, 46399 Bocholt (DE)
(74) Vertreter: Linnemann, Winfried
(86) Internationale Anmeldenummer: PCT/EP2005/006192
(87) Internationale Veröffentlichungsnummer: WO 2006/000300

(56) Entgegenhaltungen:
- EP-A- 1 327 519
- WO-A-90/12683
- WO-A-94/29106
- DE-A1- 4 112 607
- US-A- 4 273 604
- US-A- 6 146 578

## Beschreibung

Die vorliegende Erfindung betrifft einen Laminator für das Laminieren von Bauteilen, insbesondere Solarzellenmodule oder Verbundglas scheiben, durch kombinierte Anwendung von Andrückkraft und Wärme, wobei der Laminator wenigstens eine ein oder mehrere Bauteile aufnehmende, luftdicht verschließbare Laminierkammer mit einer Bauteilauflage und einer Heizeinrichtung umfaßt, wobei in der Kammer oberhalb der Bauteilauflage relativ zu dieser beweglich eine flexible Andrückmembran dicht eingespannt ist, die einen unteren Kammerteil von einem oberen Kammerteil trennt, und wobei jeder Kammerteil evakuierbar und belüftbar ist.

Ein Laminator der eingangs genannten Art ist aus der WO 94/29106 A1 bekannt. Dieses Dokument zeigt einen Vakuumlaminator, der zur Herstellung fotovoltaischer Module auf Laminatbasis geeignet ist und aus einem mittels einer Hubvorrichtung anhebbaren und absenkbaren Unterteil, an dem eine Heizplatte angebracht ist, und aus einem fest-stehenden Oberteil, in welchem eine Gummimembran angebracht ist, besteht. Nach dem Schließen des Laminators wird der Innenraum durch die Gummimembran einerseits in eine leere obere Kammer und andererseits in eine untere Kammer, in welcher sich der zu laminierende Modulstapel befindet, unterteilt. Durch eine externe Vorrichtung wird zunächst in beiden Kammern ein Vakuum angelegt, womit Luft und andere flüchtige Bestandteile aus dem Modulstapel entfernt werden, sodass ein blasenfreies Laminat gewährleistet ist. Anschließend wird die obere Kammer belüftet, wodurch die flexible Membran in bekannter Weise für eine bestimmte Zeitspanne an den Modulstapel gepresst wird, um unter Einwirkung von Hitze und Druck den Laminiervorgang durchzuführen.

Die Andrückmembran, die zur Erzeugung der während eines Laminiervorganges auf das Bauteil einwirkenden Andrückkraft dient, unterliegt im Betrieb des Laminators mechanischen, thermischen und chemischen Belastungen. Die mechanischen Belastungen ergeben sich aus den Bewegungen der Andrückmembran infolge unterschiedlicher Druckerhältnisse in den beiden Kammerteilen beiderseits der Andrückmembran sowie durch das Andrücken der Andrückmembran an das jeweils zu laminierende Bauteil. Die thermischen Belastungen ergeben sich durch die beim Laminiervorgang zur Anwendung kommende Wärme, der auch die Andrückmembran ausgesetzt ist. Die chemische Belastung der Andrückmembran resultiert aus Gasen, die während des Laminiervorganges aus dem zu laminierenden Bauteil freigesetzt werden. Diese mechanischen, thermischen und chemischen Einwirkungen auf die Andrückmembran führen mit der Zeit zu einem verschleiß, der letztendlich zu Undichtigkeiten, beispielsweise durch Bruch, der Andrückmembran führt. Durch undichte Stellen der Andrückmembran kann während des Laminiervorganges in unkontrollierter und unerwünschter Weise Luft aus dem oberen Kammerteil in den evakuierten unteren Kammerteil gelangen, was zu Fehlern oder Schäden an dem laminierten Bauteil und damit zur Produktion von Ausschuß führt. Da eine Undichtigkeit der Andrückmembran bei dem bekannten Laminator erst bei einer später folgenden Qualitätskontrolle der laminierten Bauteile festzustellen ist, kann es dazu kommen, daß über eine gewisse Zeit mit einer undichten Membran weitergearbeitet wird, so daß in größerem Umfang Ausschußprodukte mit dem Laminator produziert werden. Dies ist unwirtschaftlich und deshalb unerwünscht.

Zur Behebung dieses Nachteils ist es gängige betriebliche Praxis, bei einem Laminator nach einer bestimmten Anzahl von Laminiervorgängen die Andrückmembran vorsorglich auszutauschen, unabhängig davon, ob an der Andrückmembran bereits Schäden aufgetreten sind oder nicht. Hiermit wird zwar die Produktion von Ausschuß vermieden, jedoch wird häufig eine noch intakte Andrückmembran ersetzt, so daß hier relativ hohe Kosten für Ersatzmembranen anfallen, was ebenfalls die Wirtschaftlichkeit des Betriebes des Laminators beeinträchtigt.

Aus der DE 199 20 577 Cl ist eine Membranpresse zur Beschichtung von Werkstücken mit dünnem Beschichtungsmaterial bekannt, mit einem unteren Preßtisch, einem oberen Preßtisch, einer auf ein mit dem Beschichtungsmaterial überdeckten und damit zu beschichtenden Werkstück absenkbaren elastischen Membran, die mit einem Preßtisch eine druckdichte Kammer bildet, und mit Kanälen zum Ein- und Auslassen eines die Membran beaufschlagenden Fluids und mit einer Pressensteuerung. Dabei ist vorgesehen, daß die Presse zwei Vorratsbehälter für zwei unterschiedlich temperierte Fluide aufweist, die mit Arbeitsventilen versehen sind, die von der Pressensteuerung auf- und zusteuerbar sind, und daß die Membranpresse eine Fördervorrichtung für die Fluide aufweist. In einer Ausgestaltung dieser Membranpresse ist unterhalb einer ersten Membran eine zweite elastische Membran angeordnet, die über einen Rahmen mit der erstem Membran eine zweite druckdichte Kammer bildet, in die in Abhängigkeit von einzelnen Verfahrensschritten durch Ein- und Auslässe ein Arbeitsfluid einpreßbar ist. Auch bei dieser Membranpresse führt jede Undichtigkeit in einer der Membranen zu einer Störung der Funktion der Membranpresse und damit zur Produktion von Ausschuß oder zum Stillstand der Presse. Ein zuverlässiger Betrieb kann auch hier nur durch eine regelmäßige vorsorgliche Erneuerung der Membranen gewährleistet werden, was aufwendig und teuer ist.

Für die vorliegende Erfindung stellt sich deshalb die Aufgabe, einen Laminator der eingangs genannten Art zu schaffen, der die vorstehend dargelegten Nachteile vermeidet und mit dem insbesondere eine Produktion von Ausschuß sicher verhindert und zugleich ein wirtschaftlicher Betrieb gewährleistet wird.

Die Lösung dieser Aufgabe gelingt erfindungsgemäß mit einem Laminator der eingangs genannten Art, der dadurch gekennzeichnet ist, daß die Andrückmembran als Mehrfachmembran mit mehreren übereinanderliegenden Membranen ausgeführt ist, wobei jeweils ein Zwischenraum zwischen zwei einander benachbarten Membranen der Andrückmembran im Betrieb des Laminators evakuiert ist und die einander benachbarten Membranen unmittelbar flächig aneinander anliegen und an den Zwischenraum zwischen zwei benachbarten Membranen der Andrückmembran eine Einrichtung zum Messen des Drucks in dem Zwischenraum angeschlossen ist.

Die als Mehrfachmembran ausgeführte Andrückmembran bietet den Vorteil, daß bei einer Undichtigkeit der dem zu laminierenden Bauteil zugewandten Membran immer noch eine oder mehrere weitere Membranen innerhalb der Andrückmembran vorhanden sind, die für die notwendige Dichtigkeit der Andrückmembran insgesamt sorgen. Nur die mit dem Bauteil in Kontakt tretende Membran innerhalb der Andrückmembran unterliegt den chemischen Einflüssen, während die weiteren Membranen innerhalb der Andrückmembran durch die mit dem Bauteil in Kontakt tretende Membran vor den chemischen Einflüssen geschützt sind. Auch die mechanischen und thermischen Beanspruchungen sind an der dem Bauteil zugewandten Membran innerhalb der Andrückmembran am größten. Hiermit ist gewährleistet, daß im Betrieb des Laminators auf jeden Fall zuerst die mit dem Bauteil in Kontakt tretende Membran innerhalb der mehrlagigen Andrückmembran schadhaft wird, während die weiteren Membranen innerhalb der mehrlagigen Andrückmembran aufgrund ihrer geringeren Belastung und Beanspruchung nach einer gleich langen Einsatzzeit noch keine Schäden, insbesondere keine Undichtigkeiten aufweisen. So wird erreicht, daß auch bei einer Undichtigkeit der mit dem Bauteil in Kontakt tretenden Membran innerhalb der mehrlagigen Andrückmembran die Produktion fehlerfrei bleibt, und es kann ein längerer unterbrechungsfreier Betrieb des Laminators erzielt werden. Die Kontrolle der jeweils dem Bauteil zugewandten Membran innerhalb der mehrlagigen Andrückmembran kann vorteilhaft im Rahmen einer üblichen regelmäßigen Wartung erfolgen, wenn der Laminator ohnehin nicht in Betrieb ist. Zusätzliche Stillstandszeiten für einen außerplanmäßigen oder vorsorglichen Austausch der Membran werden so vermieden. Jede Membran kann bis zum Eintritt eines Schadens, insbesondere einer Undichtigkeit, und sogar darüber hinaus noch eingesetzt werden, was eine optimale Ausnutzung der Lebensdauer der Membranen ergibt. Damit bietet der erfindungsgemäße Laminator sowohl eine besonders hohe Sicherheit gegen die Produktion von Ausschuß als auch einen besonders wirtschaftlichen Betrieb mit geringen Kosten für Ersatzmembranen. Besonders vorteilhaft ist dabei, dass jeweils ein Zwischenraum zwischen je zwei einander benachbarten Membranen der Andrückmembran im Betrieb des Laminators evakuiert ist und daß die einander benachbarten Membranen unmittelbar flächig aneinander anliegen. Die Membranen werden auf diese Weise in ihrer Fläche zusammengefügt, ohne daß sie in ihrer Fläche fest miteinander verbunden sind, wodurch sich die als Mehrfachmembran ausgeführte Andrückmembran im Betrieb des Laminators weitestgehend wie eine einlagige Membran verhält; unerwünschte Änderungen in der Handhabung und Bedienung des Laminators werden so vermieden. Schließlich ist an einen/den Zwischenraum zwischen je zwei benachbarten Membranen der Andrückmembran eine Einrichtung zum Messen des Drucks in dem Zwischenraum angeschlossen ist. Über diese Druckmesseinrichtung kann auf einfache und zuverlässige Weise eine Information über den Zustand der Andrückmembran gewonnen werden.

Bevorzugt ist die Andrückmembran als Doppelmembran mit zwei übereinanderliegenden Membranen ausgeführt. Diese Ausführung stellt einen guten Kompromiß zwischen der angestrebten Sicherheit des Produktionsprozesses auf der einen Seite und der angestrebten hohen Wirtschaftlichkeit des Betriebes des Laminators auf der anderen Seite dar.

Weiter ist bevorzugt vorgesehen, daß die übereinanderliegenden Membranen untereinander identisch ausgeführt sind. Damit genügt ein einziger Membrantyp für den Betrieb des Laminators, was den Aufwand für die Herstellung und für die Vorhaltung von Membranen vorteilhaft niedrig hält. Auch werden auf diese Weise Fehlerquellen vermieden, die bei Einsatz unterschiedlicher Membranen innerhalb der mehrlagigen Andrückmembran entstehen würden.

Alternativ können die übereinanderliegenden Membranen voneinander verschieden, insbesondere aus unterschiedlichen Materialien, ausgeführt sein. Hier ist vorteilhaft eine Anpassung der Eigenschaften der einzelnen Membranen an die jeweils entsprechend ihrer Position in der mehrlagingen Andrückmembran gestellten unterschiedlichen Anforderungen möglich.

Um den Laminator mechanisch möglichst einfach zu halten und um auch vorhandene Laminatoren entsprechend dem erfindungsgemäßen Laminator nachrüsten zu können, ist bevorzugt weiter vorgesehen, daß die übereinanderliegenden Membranen in einen gemeinsamen Membrantragrahmen auswechselbar eingespannt sind. Vorteilhaft kann in dieser Ausführung des Laminators ein schon vorhandener Membrantragrahmen, in den bisher eine einlagige Andrückmembran eingespannt wurde, für das Einspannen der mehrlagigen Andrückmembran aus mehreren einzelnen Membranen genutzt werden.

Eine besonders einfache Handhabung der Andrückmembran und ein besonders einfacher Austausch gegen eine herkömmliche einlagige Andrückmembran wird durch eine Ausführung erreicht, bei der die übereinanderliegenden Membranen durch eine vorab angebrachte, randseitig umlaufende Verbindung, insbesondere Schweiß- oder Klebeverbindung, zu der Andrückmembran vorkonfektioniert sind.

Alternativ zu der gemeinsamen Halterung der Membranen wird vorgeschlagen, daß die übereinanderliegenden Membranen in je einen eigenen Membrantragrahmen auswechselbar eingespannt sind. In dieser Ausführung ist das Ersetzen einer undichten Membran durch eine neue Membran vereinfacht, weil nicht mehrere sondern nur eine einzige Membran aus dem betreffenden Membran-Tragrahmen ausgebaut und nur eine einzige neue Membran in diesen eingebaut werden muß.

In weiterer vorteilhafter Ausgestaltung der Einrichtung zum Messen des Drucks in dem Zwischenraum kann eine von Bedienungspersonal des Laminators wahrnehmbare Druckanzeigeeinrichtung nachgeschaltet sein. Schäden der Andrückmembran, die sich in Druckänderungen im Zwischenraum äußern, lassen sich so schnell erkennen und es können die nötigen Maßnahmen eingeleitet oder eingeplant werden.

Alternativ oder zusätzlich kann der Einrichtung zum Messen des Drucks in dem Zwischenraum eine Auswerteeinheit nachgeschaltet sein, mit der bei einem Auftreten eines einen vorgebbaren Grenzwert über- oder unterschreitenden Drucks im Zwischenraum ein Alarm auslösbar ist. In dieser Ausführung wird das Bedienungspersonal entlastet, da hier die Auswerteeinheit es übernimmt, einen Schadensfall festzustellen und als Alarm zur Kenntnis zu bringen.

Mit der Einrichtung zum Messen des Drucks in dem Zwischenraum in ihren verschiedenen Ausführungen wird jeweils die Möglichkeit geschaffen, Undichtigkeiten einer der Membranen, insbesondere der besonders,belasteten, mit dem Bauteil in Kontakt tretenden Membran, zuverlässig festzustellen. Wie weiter oben schon erläutert, kann der Betrieb des Laminators auch bei Feststellung einer Undichtigkeit z.B. der mit dem Bauteil in Kontakt tretenden Membran innerhalb der mehrlagigen Andrückmembran zunächst noch weitergehen, da mindestens eine weitere Membran innerhalb der mehrlagigen Andrückmembran noch für die erforderliche Dichtigkeit der Andrückmembran insgesamt sorgt. Es muß lediglich Vorsorge getroffen werden, daß bei nächster Gelegenheit, insbesondere bei der nächsten regelmäßigen Wartung des Laminators, ein Austausch der undichten Membran gegen eine neue Membran erfolgt. Die Einrichtung zum Messen und des Drucks in dem Zwischenraum sorgt für eine frühzeitige Feststellung von Membranundichtigkeiten, bevor diese für das Bedienungspersonal des Laminators mit bloßem Auge erkennbar werden. Damit ist ein besonders sicherer Betrieb des Laminators gewährleistet, was die Produktion von Ausschuß weitestgehend ausschließt.

Weiter ist erfindungsgemäß bevorzugt vorgesehen, daß der Laminator ein Unterteil mit dem unteren Kammerteil, der Bauteilauflage und der Heizeinrichtung und ein deckelartiges Oberteil mit dem oberen Kammerteil und der Andrückmembran umfaßt und daß das Oberteil zwischen einer vom Unterteil abgehobenen Offenstellung und einer auf das Unterteil abgesenkten Schließstellung verstellbar ist. In der Offenstellung des Oberteils des Laminators ist die Andrückmembran, insbesondere die dem zu laminierenden Bauteil jeweils zugewandte Membran der mehrlagigen Andrückmembran, für das Bedienungspersonal leicht zugänglich. Ein Austausch einer Membran oder mehrerer Membranen der mehrlagigen Andrückmembran ist so auf relativ einfache Weise, insbesondere ohne eine aufwendige Demontage von Teilen des Laminators, möglich. Das Anheben und Absenken des Oberteils kann dabei beispielsweise linear in Vertikalrichtung oder durch eine Schwenkbewegung erfolgen. Auch ein horizontales oder kombiniert vertikales und horizontales Verfahren des Oberteils relativ zum Unterteil ist zum Öffnen und Schließen des Laminators möglich. Statt des Oberteils kann auch das Unterteil der verstellbare Teil des Laminators sein, wobei dann das Oberteil ortsfest positioniert ist. Für die Verstellung von Oberteil und Unterteil relativ zueinander wird zweckmäßig und wie an sich bekannt ein Kraftantrieb an dem Laminator eingesetzt.

Eine weitere Ausgestaltung des Laminators sieht vor, daß an einen Zwischenraum zwischen je zwei benachbarten Membranen der Andrückmembran eine Einrichtung zum Evakuieren und/oder Belüften des Zwischenraums angeschlossen ist. Mit dieser Einrichtung kann der Zwischenraum mit laminatoreigenen Mitteln in gewünschter Weise für den Betrieb des Laminators evakuiert werden. Zudem kann mit dieser Einrichtung das Einspannen oder Ausbauen einer Membran erleichtert werden. Außerdem wird so eine zusätzliche Möglichkeit zur Prüfung der Dichtigkeit der Membranen geschaffen, indem z.B. im Rahmen von Wartungsarbeiten ein Überdruck im Zwischenraum oder in den Zwischenräumen erzeugt wird und dann beobachtet wird, ob der Druck konstant bleibt oder absinkt.

Schließlich ist erfindungsgemäß bei dem Laminator noch vorgesehen, daß die Einrichtung zum Evakuieren und/oder Belüften des Zwischenraums eine Leitungs- und Ventilanordnung sowie eine Vakuumpumpe umfaßt und daß mittels dieser oder einer weitere Leitungs- und Ventilanordnung und mittels dieser Vakuumpumpe auch der untere und der obere Kammerteil jeweils evakuierbar und belüftbar sind. In dieser Ausführung benötigt der Laminator für das Evakuieren der beiden Kammerteile und des Zwischenraums nur eine einzige Vakuumpumpe, was den technischen Aufwand und damit die Kosten für den Laminator niedrig hält. Durch die erwähnten Leitungs- und Ventilanordnungen lassen sich in den beiden Kammerteilen und im Zwischenraum zwischen den Membranen, die für den jeweiligen Betriebszustand des Laminators erforderlichen und optimalen Drücke einstellen, wobei diese Druckeinstellung zweckmäßig durch eine Steuereinrichtung automatisiert erfolgt.

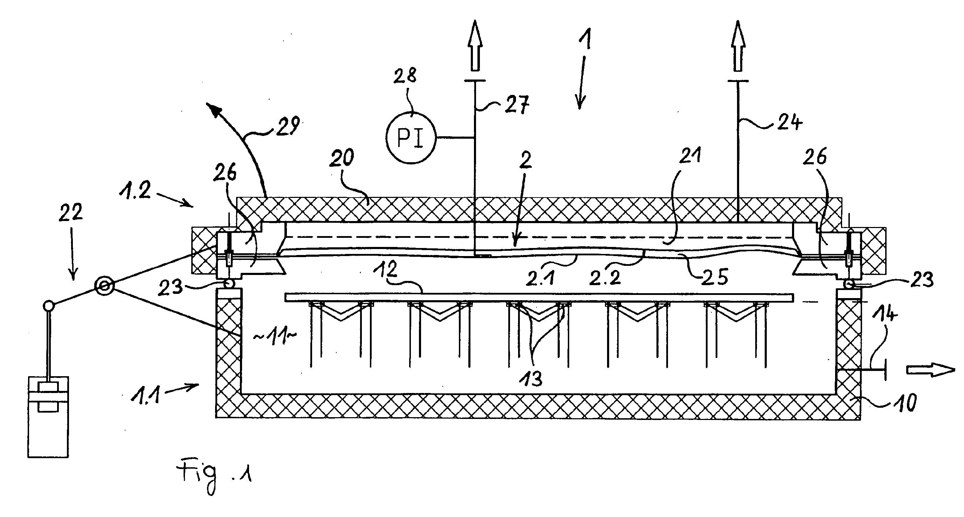

Ein Ausführungsbeispiel der Erfindung wird im folgenden anhand einer Zeichnung erläutert. Die einzige Figur der Zeichnung zeigt einen Laminator in einem schematischen Längsschnitt.

Wie die Zeichnungsfigur zeigt, besitzt der Laminator 1 in dem dargestellten Ausführungsbeispiel ein Unterteil 1.1 und ein relativ dazu mittels eines Kraftantriebes 22 im Sinne des Pfeils 29 verschwenkbares Oberteil 1.2.

In der in der Zeichnungsfigur gezeigten Schließstellung des Oberteils 1.2 liegt dieses unter der Zwischenlage einer umlaufenden Dichtung 23 luftdicht auf dem Unterteil 1.1 auf.

Im Inneren des Unterteils 1.1 liegt mit horizontaler Ausrichtung eine Bauteilauflage 12, die unterseitig mit einer Heizeinrichtung 13 zum Erhitzen der Bauteilauflage 12 versehen ist. Die Bauteilauflage 12 ist beispielsweise durch eine oberseitig glatte Metallplatte, vorzugsweise aus Stahl, gebildet. Die Heizeinrichtung 13 kann z.B. eine elektrische Heizeinrichtung oder eine Heizeinrichtung, die mit einem fluiden Heizmedium arbeitet, sein. Wenn es für den Betrieb des Laminators 1 erforderlich ist, kann die Einrichtung 13 auch gleichzeitig eine Kühlfunktion haben oder durch eine zusätzliche Kühleinrichtung ergänzt sein. Nach außen hin ist das Unterteil 1.1 durch ein geschlossenes und wärmeisolierendes Gehäuse 10 begrenzt.

Das Oberteil 1.2 des Laminators 1 ist hier in der Form eines Deckels 20 ausgeführt, der ebenfalls nach außen geschlossen sowie mit einer Wärmeisolierung versehen ist.

Im Inneren des Oberteils 1.2 liegt im Abstand und etwa parallel zu dessen Unterseite eine Andrückmembran 2, die hier zweilagig ausgebildet ist und eine untere Membran 2.1 sowie eine parallel zur unteren angeordnete obere Membran 2.2 umfaßt. Mehr als zwei Membranen 2.1, 2.2 sind selbstverständlich auch einsetzbar. Die Membranen 2.1 und 2.2 der Andrückmembran 2 sind randseitig umlaufend in einen gemeinsamen Membrantragrahmen 26 dicht eingespannt. Dabei können die Membranen 2.1 und 2.2 zwei einzelne Teile sein oder alternativ vorab an ihrem Rand umlaufend miteinander verbunden, z.B. verschweißt oder verklebt, sein.

Der Membrantragrahmen 26 ist seinerseits mit dem Deckel 20 des Oberteils 1.2 dicht verbunden, vorzugsweise lösbar verschraubt.

Durch die Andrückmembran 2 wird bei geschlossenem Laminator 1 das Innere des Laminators 1 in einen unteren Kammerteil 11 und einen oberen Kammerteil 21 unterteilt, wobei die beiden Kammerteile 11, 21 luftdicht voneinander und von der äußeren Umgebung getrennt sind.

Zum Laminieren eines Bauteils im Laminator 1 wird bei angehobenem Oberteil 1.2 ein zu laminierendes Bauteil aus mehreren miteinander zu laminierenden Schichten auf die Oberseite der Bauteilauflage 12 aufgelegt. Anschließend wird der Laminator 1 durch Absenken des Oberteils 1.2 luftdicht geschlossen. Über Leitungen 14 und 24, die zu einer gemeinsamen oder je einer eigenen Vakuumpumpe, die hier nicht dargestellt ist, führen, wird das Innere des Laminators 1, nämlich dessen Kammerteile 11 und 21, evakuiert. Auf diese Weise werden Lufteinschlüsse innerhalb des zu laminierenden Bauteils vermieden. Gleichzeitig wird das Bauteil durch die Heizeinrichtung 13, die die Bauteilauflage 12 erhitzt, auf eine für den Laminiervorgang erforderliche Temperatur gebracht.

Nach der erforderlichen Aufheizzeit wird durch Belüften des oberen Kammerteils 21 die Andrückmembran 2 infolge der Druckdifferenz zwischen den beiden Kammerteilen 11 und 21 an die nach oben weisende Seite des Bauteils angelegt und übt auf dieses eine gegen die Bauteilaufnahme 12 gerichtete Andrückkraft aus. Nach ausreichender Andrückzeit wird auch die untere Teilkammer 11 belüftet und das Oberteil 1.2 wird vom Unterteil 1.1 abgehoben. Das fertig laminierte Bauteil kann aus dem Laminator 1 entnommen werden und es kann eine neues zu laminierendes Bauteil in den Laminator 1 eingelegt werden.

Bei dem Laminiervorgang unterliegt die hier untere, dem Bauteil auf der Bauteilaufnahme 12 zugewandte Membran 2.1 der höchsten Beanspruchung, wobei hier mechanische Belastungen durch die Membranbewegungen, thermische Belastungen durch die Wärme der Bauteilaufnahme und des Bauteils und chemische Einflüsse durch beim Laminiervorgang freigesetzte Gase auftreten. Damit unterliegt die untere Membran 2.1 innerhalb der mehrlagigen Andrückmembran 2 auch dem höchsten Verschleiß im Betrieb des Laminators 1. Der Verschleiß führt mit der Zeit dazu, daß die untere Membran 2.1 der mehrlagigen Andrückmembran 2 undicht wird. Dies hat aber im Betrieb des Laminators 1 keine unmittelbare negative Folge, weil die oben angeordnete, zweite Membran 2.2 der mehrlagigen Andrückmembran 2 noch für die nötige Dichtigkeit sorgt. Dies wird dadurch gewährleistet, daß die obere Membran 2.2, die ja durch die untere Membran 2.1 geschützt ist, geringeren mechanischen, thermischen und chemischen Belastungen unterworfen ist, so daß hier in jedem Fall bei der oberen Membran 2.2 eine längere Lebensdauer als bei der unteren Membran 2.1 erwartet werden kann.

Das Auftreten einer Undichtigkeit in der unteren Membran 2.1 kann mittels einer Leitung 27 und eines damit verbundenen Druckanzeigers 28 festgestellt werden. Die Leitung 27 mündet in einen Zwischenraum 25 zwischen der unteren Membran 2.1 und der oberen Membran 2.2 der Andrückmembran 2. Im normalen Betrieb des Laminators 1 ist der Zwischenraum 25 evakuiert, wodurch die Membranen 2.1 und 2.2 der Andrückmembran 2 sich flächig aneinander anlegen, ohne in ihrer Fläche eine dauerhafte Verbindung miteinander einzugehen, wobei sich die Andrückmembran 2 dann praktisch wie eine einlagige Membran verhält. Bei einer Undichtigkeit der unteren Membran 2.1 ändert sich der Druck im Zwischenraum 25, weil Luft in den Zwischenraum 25 eintritt, was durch die Druckanzeige 28 für das Bedienungspersonal des Laminators 1 erkennbar wird. Der Betrieb des Laminators 1 kann dennoch bis zu einer ohnehin vorgesehenen Wartung, z. B. am Wochenende bei Stillstandszeiten des Laminators 1, weitergehen. Im Rahmen der Wartung kann dann die defekte untere Membran 2.1 entfernt werden und durch eine neue Membran ersetzt werden.

Vorzugsweise wird die neue Membran dann als obere Membran 2.2 eingebaut und die vorher obere Membran 2.2 wird dadurch zur neuen unteren Membran 2.1. Die Membranen 2.1 und 2.2 können so für ihre maximal mögliche Lebensdauer, nämlich bis zum tatsächlichen Eintreten einer Undichtigkeit und sogar für eine gewisse Zeit noch darüber hinaus, genutzt werden und müssen nicht frühzeitig vorsorglich ausgewechselt werden.

Falls im laufenden Betrieb des Laminators 1 die untere Membran 2.1 nicht nur undicht werden sondern sogar reißen sollte und dann keine glatte Fläche mehr bildet, besteht die Möglichkeit, diese gerissene Membran 2.1 zunächst nur durch Ausschneiden parallel zum Membrantragrahmen 26 zu entfernen, um ohne größeren Zeitverzug die weitere Produktion zu gewährleisten. Für die relativ kurze Zeit bis zur nächsten regulären Wartung kann ein Betrieb des Laminators 1 mit einer Andrückmembran 2, die eine Membran weniger als im Normalbetrieb umfaßt, in Kauf genommen werden. Dies gilt insbesondere dann, wenn die Andrückmembran 2 mehr als zwei Membranen aufweist.

Außer mit dem Druckanzeiger 28 ist die Leitung 27 hier auch noch mit einer eigenen oder mit der oben schon erwähnten Vakuumpumpe verbunden, um bei Bedarf den Zwischenraum 25 zwischen den Membranen 2.1 und 2.2 der Andrückmembran 2 evakuieren oder belüften zu können.

Ein Austausch der Membran 2.1 oder der Membran 2.2 oder beider Membranen 2.1 und 2.2 ist im nach oben verschwenkten Zustand des Oberteils 1.2 leicht möglich, da dann sowohl der Membran-Tragrahmen 26 als auch die Membranen 2.1 und 2.2 der Andrückmembran 2 für das Wartungspersonal gut zugänglich sind.

Die Unterbringung einer doppellagigen oder mehrlagigen Andrückmembran 2 mit zwei oder mehr Einzelmembranen 2.1, 2.2 ist innerhalb des Laminators 1 problemlos möglich, so daß auch ein bereits vorhandener Laminator 1 in seinem Membran-Tragrahmen 26 statt einer bisher üblichen einlagigen Membran auch eine doppellagige oder mehrlagige Andrückmembran 2 aufnehmen kann, ohne daß weitere technische Veränderungen an dem Laminator 1 erforderlich werden. Somit lassen sich mit einem geringen zusätzlichen technischen Aufwand eine höhere Zuverlässigkeit und eine bessere Wirtschaftlichkeit auch bei schon im Einsatz befindlichen Laminatoren erzielen.

## Patentansprüche

1. Laminator (1) für das Laminieren von Bauteilen, insbesondere Solarzellenmodule oder Verbundglasscheiben, durch kombinierte Anwendung von Andrückkraft und Wärme, wobei der Laminator (1) wenigstens eine ein oder mehrere Bauteile aufnehmende, luftdicht verschließbare Laminierkammer (11, 21) mit einer Bauteilauflage (12) und einer Heizeinrichtung (13) umfaßt, wobei in der Kammer (11, 21) oberhalb der Bauteilauflage (12) relativ zu dieser beweglich eine flexible Andrückmembran (2) dicht eingespannt ist, die einen unteren Kammerteil (11) von einem oberen Kammerteil (21) trennt, und wobei jeder Kammerteil (11, 21) evakuierbar und belüftbar ist,
**dadurch gekennzeichnet,**
- **daß** die Andrückmembran (2) als Mehrfachmembran mit mehreren übereinanderliegenden Membranen (2.1, 2.2) ausgeführt ist,
- **daß** jeweils ein Zwischenraum (25) zwischen je zwei einander benachbarten Membranen (2.1, 2.2) der Andrückmembran (2) im Betrieb des Laminators (1) evakuiert ist und die einander benachbarten Membranen (2.1, 2.2) unmittelbar flächig aneinander anliegen und
- **daß** an einen/den Zwischenraum (25) zwischen je zwei benachbarten Membranen (2.1, 2.2) der Andrückmembran (2) eine Einrichtung (28) zum Messen des Drucks in dem Zwischenraum (25) angeschlossen ist.

2. Laminator nach Anspruch 1, **dadurch gekennzeichnet, daß** die Andrückmembran (2) als Doppelmembran mit zwei übereinanderliegenden Membranen (2.1, 2.2) ausgeführt ist.

3. Laminator nach Anspruch 1 oder 2, **dadurch gekennzeichnet, daß** die übereinanderliegenden Membranen (2.1, 2.2) untereinander identisch ausgeführt sind.

4. Laminator nach Anspruch 1 oder 2, **dadurch gekennzeichnet, daß** die übereinanderliegenden Membranen (2.1, 2.2) voneinander verschieden, insbesondere aus unterschiedlichen Materialien, ausgeführt sind.

5. Laminator nach einem der Ansprüche 1 bis 4, **dadurch gekennzeichnet, daß** die übereinanderliegenden Membranen (2.1, 2.2) in einen gemeinsamen Membrantragrahmen (26) auswechselbar eingespannt sind.

6. Laminator nach einem der vorhergehenden Ansprüche, **dadurch gekennzeichnet, daß** die übereinanderliegenden Membranen (2.1, 2.2) durch eine vorab angebrachte, randseitig umlaufende Verbindung, insbesondere Schweiß- oder Klebeverbindung, zu der Andrückmembran (2) vorkonfektioniert sind.

7. Laminator nach einem der Ansprüche 1 bis 4, **dadurch gekennzeichnet, daß** die übereinanderliegenden Membranen (2.1, 2.2) in je einen eigenen Membrantragrahmen auswechselbar eingespannt sind.

8. Laminator nach einem der vorhergehenden Ansprüche, **dadurch gekennzeichnet, daß** der Einrichtung (28) zum Messen des Drucks in dem Zwischenraum (25) eine von Bedienungspersonal des Laminators (1) wahrnehmbare Druckanzeigeeinrichtung nachgeschaltet ist.

9. Laminator nach einem der vorhergehenden Ansprüche, **dadurch gekennzeichnet, daß** der Einrichtung (28) zum Messen des Drucks in dem Zwischenraum (25) eine Auswerteeinheit nachgeschaltet ist, mit der bei einem Auftreten eines einen vorgebbaren Grenzwert über- oder unterschreitenden Drucks im Zwischenraum (25) ein Alarm auslösbar ist.

10. Laminator nach einem der vorhergehenden Ansprüche, **dadurch gekennzeichnet, daß** der Laminator (1) ein Unterteil (1.1) mit dem unteren Kammerteil (11), der Bauteilauflage (12) und der Heizeinrichtung (13) und ein deckelartiges Oberteil (1.2) mit dem oberen Kammerteil (21) und der Andrückmembran (2) umfaßt und daß das Oberteil (1.2) zwischen einer vom Unterteil (1.1) abgehobenen Offenstellung und einer auf das Unterteil (1.1) abgesenkten Schließstellung verstellbar ist.

11. Laminator nach einem der vorhergehenden Ansprüche, **dadurch gekennzeichnet, daß** an den Zwischenraum (25) zwischen je zwei benachbarten Membranen (2.1, 2.2) der Andrückmembran (2) eine Einrichtung zum Evakuieren und/oder Belüften des Zwischenraums (25) angeschlossen oder anschließbar ist.

12. Laminator nach Anspruch 11, **dadurch gekennzeichnet, daß** die Einrichtung zum Evakuieren und/oder Belüften des Zwischenraums (25) eine Leitungs- und Ventilanordnung (27) sowie eine Vakuumpumpe umfaßt und daß mittels dieser oder einer weitere Leitungs- und Ventilanordnung (14, 24) und mittels dieser Vakuumpumpe auch der untere und der obere Kammerteil (11, 21) jeweils evakuierbar und belüftbar sind.

## Claims

1. Laminator (1) for laminating structural components, in particular solar module cells or laminated glass panes by combining pressing force and heat, wherein the laminator (1) comprises at least one laminating chamber (11, 21) for receiving one or several structural components which is provided with a support (12) for said structural components, a heating unit (13) and with a flexible compression membrane (2) which is sealingly stretched in the chamber (11, 21) above the structural element support (12) and is movable with respect thereto, separating a lower part (11) of the chamber from a top part (21) thereof, thereby enabling each part to be evacuated and aerated,
**characterized in**
- **that** the compression membrane (2) is embodied in the form of a multiple membrane consisting of a plurality of superimposed membranes (2.1, 2.2);
- **that** a space (25) each between two adjacent membranes (2.1, 2.2) each of the compression membrane (2) is evavuated in the operation of the laminator (1), and that the adjacent membranes (2.1, 2.2) directly contact each other over their surface; and
- **that** a device (28) is connected to one/the space (25) - between two adjacent membranes (2.1, 2.2) each of the compression membrane (2) - for measuring the pressure in the space (25).

2. Laminator according to claim 1, **characterized in that** the compression membrane (2) is designed as a double membrane with two superimposed membranes (2.1, 2.2).

3. Laminator according to claim 1 or 2, **characterized in that** the superimposed membranes (2.1, 2.2) are identical in design among each other.

4. Laminator according to claim 1 or 2, **characterized in that** the superimposed membranes (2.1, 2.2) can be designed differently from each other, especially of different materials.

5. Laminator according to any one of the claims 1 to 4, **characterized in that** the superimposed membranes (2.1, 2.2) are replaceably stretched into a joint membrane carrying frame (26).

6. Laminator according to any one of the preceding claims, **characterized in that** the superimposed membranes (2.1, 2.2) are prefabricated to the compression membrane (2) by a circumferential connection provided in advance on the edge, especially a fusible or adhesive connection.

7. Laminator according to any one of the claims 1 to 4, **characterized in that** the superimposed membranes (2.1, 2.2) are replaceably stretched each into an own membrane carrying frame.

8. Laminator according to any one of the preceding claims, **characterized in that** a pressure indicating device perceptible for the operating personnel of the laminator (1) is series connected to the device (28) for measuring the pressure in the space (25).

9. Laminator according to any one of the preceding claims, **characterized in that** an analysis unit is series connected to the device (28) for measuring the pressure in the space (25) by means of which an alarm can be triggered in case of a pressure occurring in the space (25) which exceeds or falls below a specifiable limit value.

10. Laminator according to any one of the preceding claims, **characterized in that** the laminator (1) comprises a base (1.1) with the lower part of the chamber (11), the structural component support (12), and the heating unit (13), and a cover-type top (1.2) with the top part of the chamber (21) and the compression membrane (2), and that the top (1.2) is adjustable between an open position raised from the base (1.1) and a closed position lowered to the base (1.1).

11. Laminator according to any one of the preceding claims, **characterized in that** a device for the evacuation and/or aeration of the space (25) is connected or connectable to the space (25) between two adjacent membranes (2.1, 2.2) each of the compression membrane (2).

12. Laminator according to claim 11, **characterized in that** the device for the evacuation and/or aeration of the space (25) comprises a line and valve arrangement (27), as well as a vacuum pump, and that
- by means of this or another line and valve arrangement (14, 24) and by means of this vacuum pump - the lower part and the top part of the chamber (11, 21) as well can each be evacuated and aerated.

## Revendications

1. Dispositif à stratifier (1) pour la stratification de composants, en particulier de modules de cellules solaires ou de vitres en verre feuilleté, par utilisation combinée de la force de pression et de la chaleur, sachant que le dispositif à stratifier (1) comprend au moins une chambre de stratification (11, 21) logeant un ou plusieurs composants, pouvant être fermée hermétiquement et présentant un support pour composants (12) et un dispositif de chauffage (13), qu'une membrane de pression (2) souple est tendue de façon hermétique dans la chambre (11, 21), au-dessus du support pour composants (12) et de façon mobile par rapport à ce dernier, laquelle membrane sépare la chambre en une partie inférieure (11) et une partie supérieure (21), et que chacune des parties de la chambre (11, 21) peut être vidée de son air et aérée,
**caractérisé en ce**
- **que** la membrane de pression (2) est conçue sous forme de membrane multiple composée de plusieurs membranes superposées (2.1, 2.2),
- **que** chacun des espaces intermédiaires (25) situés entre deux membranes respectivement voisines (2.1, 2.2) de la membrane de pression (2) est vidé de son air lors du fonctionnement du dispositif à stratifier (1) et que les membranes respectivement voisines (2.1, 2.2) sont accolées à plat directement les unes contre les autres, et
- **qu'**un dispositif (28) destiné à mesurer la pression dans l'espace intermédiaire (25) est connecté à un/l'espace intermédiaire (25) situé entre deux membranes respectivement voisines (2.1, 2.2) de la membrane de pression (2).

2. Dispositif à stratifier selon la revendication 1, **caractérisé en ce que** la membrane de pression (2) est conçue sous forme de membrane double présentant deux membranes superposées (2.1, 2.2).

3. Dispositif à stratifier selon la revendication 1 ou 2, **caractérisé en ce que** les membranes superposées (2.1, 2.2) sont entre elles conçues de manière identique.

4. Dispositif à stratifier selon la revendication 1 ou 2, **caractérisé en ce que** les membranes superposées (2.1, 2.2) sont conçues différemment l'une de l'autre, en particulier dans des matériaux différents.

5. Dispositif à stratifier selon l'une des revendications 1 à 4, **caractérisé en ce que** les membranes superposées (2.1, 2.2) sont tendues, de manière à pouvoir être remplacées, dans un cadre porteur de membrane (26) commun.

6. Dispositif à stratifier selon l'une des revendications précédentes, **caractérisé en ce que** les membranes superposées (2.1, 2.2) sont préalablement assemblées pour former la membrane de pression (2), à l'aide d'une liaison continue sur les bords appliquée à l'avance, en particulier une liaison par soudage ou collage.

7. Dispositif à stratifier selon l'une des revendications 1 à 4, **caractérisé en ce que** les membranes superposées (2.1, 2.2) sont tendues, de manière à pouvoir être remplacées, dans chacune un cadre porteur de membrane individuel.

8. Dispositif à stratifier selon l'une des revendications précédentes, **caractérisé en ce qu'**un dispositif d'indication de la pression pouvant être lu par les utilisateurs du dispositif à stratifier (1) est connecté à la suite du dispositif (28) destiné à mesurer la pression dans l'espace intermédiaire (25).

9. Dispositif à stratifier selon l'une des revendications précédentes, **caractérisé en ce qu'**est connectée, à la suite du dispositif (28) destiné à mesurer la pression dans l'espace intermédiaire (25), une unité d'évaluation grâce à laquelle une alarme peut être déclenchée si une pression inférieure ou supérieure à une valeur limite pouvant être prédéterminée est détectée dans l'espace intermédiaire (25).

10. Dispositif à stratifier selon l'une des revendications précédentes, **caractérisé en ce que** le dispositif à stratifier (1) est composé d'une partie inférieure (1.1) comprenant la partie inférieure de la chambre (11), le support pour composants (12) et le dispositif de chauffage (13), et d'une partie supérieure (1.2) semblable à un couvercle comprenant la partie supérieure de la chambre (21) et la membrane de pression (2), et que la partie supérieure (1.2) est déplaçable entre une position ouverte à distance de la partie inférieure (1.1) et une position fermée abaissée sur la partie inférieure (1.1).

11. Dispositif à stratifier selon l'une des revendications précédentes, **caractérisé en ce qu'**un dispositif destiné à vider l'espace intermédiaire (25) de son air et/ou à l'aérer est connecté ou peut être connecté à l'espace intermédiaire (25) situé entre deux membranes respectivement voisines (2.1, 2.2) de la membrane de pression (2).

12. Dispositif à stratifier selon la revendication 11, **caractérisé en ce que** le dispositif destiné à vider l'espace intermédiaire (25) de son air et/ou à l'aérer comprend une installation de lignes et de soupapes (27) ainsi qu'une pompe à vide, et que grâce à celle-ci ou à une autre installation de lignes et de soupapes (14, 24) et grâce à cette pompe à vide, la partie inférieure et la partie supérieure de la chambre (11, 21) peuvent également respectivement être vidées de leur air et aérées.
